# EUROPÄISCHE PATENTSCHRIFT

(11) **EP 2 922 293 B1**
(45) Veröffentlichungstag und Bekanntmachung des Hinweises auf die Patenterteilung: **08.01.2020**
(21) Anmeldenummer: 14004036.1
(22) Anmeldetag: 29.11.2014
(51) Int. Cl.: H04N 7/18, B60R 1/00, B61K 13/04

(54) **Verfahren zur Überwachung des Fahrzeuginnenraums und des Fahrzeugaußenraums**
Method for monitoring the vehicle interior and the vehicle exterior
Procédé de surveillance de l'intérieur et l'extérieur de véhicule

(30) Priorität: 20.03.2014 DE 102014003952
(43) Veröffentlichungstag der Anmeldung: 23.09.2015
(73) Patentinhaber: MAN Truck & Bus SE, 80995 München (DE)
(72) Erfinder: Echtler, Johannes, 80686 München (DE); Schierlinger, Benjamin, 86558 Hohenwart (DE); Schwertberger, Walter, 82278 Althegnenberg (DE); Völl, Sebastian, 85221 Dachau (DE); Weise, Sigrun, 85221 Dachau (DE)
(74) Vertreter: Liebl, Thomas

(56) Entgegenhaltungen:
- EP-A1- 2 397 386
- EP-A1- 2 464 112
- CN-U- 202 782 967
- JP-A- 2002 316 603
- JP-A- 2007 087 337
- JP-A- 2008 168 714

## Beschreibung

Die Erfindung betrifft ein Verfahren nach dem Oberbegriff des Anspruches 1 sowie ein Fahrzeug nach dem Anspruch 15.

Aus der JP 2008 168714 A ist ein gattungsgemäßes Verfahren zur Überwachung des Fahrzeuginnenraums und des Fahrzeugaußenraums bekannt. Aus der EP 2 464 112 A1 und aus der JP 2007 087337 A ist jeweils ein Verfahren bekannt, das ein Erkennen und Hervorheben eines sich bewegenden Objekts auf den dem Fahrer angezeigten Bildern betrifft. EP2397386 A offenbart ein Zugüberwachungssystem. Kameras sind auf den Türen positioniert und erfassen sowohl die Außenseite als auch die Innenseite der Wagen, und die in den Bildern erkannten sich bewegenden Objekte werden hervorgehoben.

Einstiege und Ladeöffnungen bei Fahrzeugen zum Personen- und/ oder Gütertransport sind durch den Fahrzeugführer zumeist nicht oder nur schlecht direkt einsehbar. Um hier Abhilfe zu schaffen werden bereits Spiegel oder Kamera-Display-Systeme eingesetzt. Dabei treten allerdings eine Reihe von Problemen auf. Wird nur ein Spiegel oder eine Kamera verwendet, ist entweder der Außenbereich oder der Innenbereich des Fahrzeugs gut einsehbar, je nach dem ob ein Innenspiegel, bzw. eine Fahrzeuginnenraumkamera oder ein Außenspiegel, bzw. eine Fahrzeugaußenraumkamera zum Einsatz kommt. Werden jeweils ein Innenspiegel, bzw. eine Fahrzeuginnenraumkamera und ein Außenspiegel, bzw. eine Fahrzeugaußenraumkamera eingesetzt, wechseln Personen oder Gegenstände, die vom Innenraum des Fahrzeugs in den Außenraum wechseln und umgekehrt, von einem ersten Spiegel bzw. Kamerabereich in den zweiten. Werden die beiden Bereiche nun mittels Kameras aufgenommen und im Wechsel auf einem Display oder auf unterschiedlichen Displayeinrichtungen dargestellt oder vom Fahrzeugführer in unterschiedlichen Spiegeln beobachtet, geht dem Fahrzeugführer der Zusammenhang verloren. Der Grund dafür ist, dass Objekte - Person oder Gegenstand - von einem Display, bzw. Spiegel verschwinden und im anderen Display, bzw. Spiegel wieder auftauchen, aber, aufgrund der unterschiedlichen Erfassungswinkel und gegebenenfalls der unterschiedlichen Abbildungsmaßstäbe der Kameras, bzw. Spiegel, nicht als dieselben Objekte identifizierbar sind, insbesondere bei flüchtiger Betrachtung. Durch diese unklare Situation beim Aus- und Einsteigen von Fahrgästen, bzw. beim Be- und Entladen des Fahrzeugs, kommt es häufig zu Fehleinschätzungen durch den Fahrzeugführer, der fälschlich davon ausgeht, dass der Einstiegs- oder Ladebereich frei ist. Nimmt dieser in Folge solcher Fehleinschätzungen Handlungen vor, wie das Anfahren des Fahrzeugs oder das Betätigen von Türen oder Ladebühnen, kann es zu Unfällen kommen. Es besteht also ein gesteigertes Interesse, dem Fahrzeugführer eine klare Einschätzung der Ein- bzw. Ausstiegssituation sowie der Ladesituation zu ermöglichen, um so Unfälle zu verhüten.

In Verbindung mit Fahrzeugen sind eine Reihe von Verfahren und Anordnungen bekannt, dem Fahrzeugführer die Einschätzung einer Situation zu erleichtern. So beschreibt die DE 102 27 221 A1 ein Verfahren, bei dem der Innen- bzw. Außenraum eines Fahrzeugs mittels wenigstens einer Rundsichtkamera überwacht wird. Die erfassten Bilddaten werden sodann einer Transformation in zylindrische oder ebene Koordinaten unterzogen und mittels einer Bildauswertung auf besonders interessante Bereiche hin analysiert, um diese automatisiert auszuwählen und einen zweiten Sensor darauf auszurichten. Es soll damit erreicht werden, dass der Innen- wie auch der Außenraum des Fahrzeugs wesentlich verlässlicher und sicherer erfasst werden, um eine wesentlich verlässlichere Basis für spezielle Fahrzeuganwendungen, von einer Warnfunktion bis zu einem autonomen Bremsen, Beschleunigen oder Ausweichen des Fahrzeugs zu schaffen. Eine ähnliches Verfahren ist auch aus der DE 101 58 415 A1 bekannt.

Weiter ist es, wie beispielsweise in der DE 20 2011 005 102 U1 beschrieben, zur Erleichterung des Einparkens üblich, Rückfahrkameras einzusetzen. Diese befinden sich am Heck des Fahrzeugs und filmen die Umgebung hinter dem Wagen. Sie zeigen ihr Bild auf einem Display im Cockpit des Fahrzeugs an, dabei können verschiedenfarbige Hilfslinien im Display mit dargestellt werden, die zum Beispiel aus dem Lenkradeinschlag gewonnen werden und den durch diesen vorgegebenen Weg sichtbar machen. In Erweiterung solcher Rückfahrsysteme existieren sogenannte Bird's View-Systeme, die ein Bild aus der Vogelperspektive, also von oben auf das Fahrzeug, erzeugen. Hierbei werden neben einer Rückfahrkamera weitere Kameras an der Front und den Seiten des Fahrzeugs verwendet. Alle Bilder werden dabei digital entzerrt und dem Fahrzeugführer auf einem Display dargestellt.

Aus der DE 10 2007 000 449 A1 sind darüber hinaus Systeme bekannt, die in Bewegung befindliche Objekte vor bewegtem oder statischem Hintergrund erfassen und zählen. Hierzu wird ein durch Sensoren erfasster Bewegtbildstrom analysiert.

Ausgehend von diesem Stand der Technik ist es Aufgabe der Erfindung, ein Verfahren anzugeben, das bei Fahrzeugen zum Personen- oder Gütertransport das Geschehen beim Ein- oder Aussteigen oder beim Be- oder Entladen des Fahrzeugs so auf einer Darstellungseinrichtung abbildet, dass dem Fahrzeugführer, bei nicht oder nur eingeschränkt gegebener direkter Einsicht in diese Bereiche, eine im Wesentlichen uneingeschränkte zusammenhängende Einsicht mittels der Darstellungseinrichtung ermöglicht wird.

Diese Aufgabe wird gelöst mit den Merkmale der unabhängigen Ansprüche. Vorteilhafte Ausgestaltungen sind Gegenstand der Unteransprüche.

Erfindungsgemäß sind wenigstens eine Innenraumkamera und wenigstens eine Außenraumkamera vorgesehen, die wenigstens Teilbereiche des Fahrzeuginnenraums und des Fahrzeugaußenraums erfassen und den jeweiligen Bildstrom an eine Darstellungseinrichtung übergeben. Die Bilderfassung und Darstellung erfolgt dabei so, dass die Teilbereiche zumindest in Teilen aneinandergrenzen, bevorzugt dergestalt aneinandergrenzen, dass die Darstellung mittels der Darstellungseinrichtung, gegebenenfalls durch Bildtransformation, maßstäblich und perspektivisch so erfolgt, dass die Darstellungsbereiche des Fahrzeuginnenraums und des Fahrzeugaußenraums, zumindest an den aneinandergrenzenden Teilen, ohne wesentliche bzw. ganz ohne erkennbare Änderung von Maßstab und Perspektive dargestellt sind. Auf diese Weise wird vorteilhaft erreicht, dass der Fahrzeugführer das Geschehen am Übergang zwischen Fahrzeuginnenraum und Fahrzeugaußenraum unmittelbar erkennt und sein Verhalten daran ausrichten kann.

Die Darstellung des Fahrzeuginnenraums und des Fahrzeugaußenraums kann auf je einer Darstellungseinrichtung erfolgen, wobei diese vorteilhaft zueinander so angeordnet sind, dass die aneinandergrenzenden Teilbereiche zueinander benachbart dargestellt sind. Auch die Darstellung des Fahrzeuginnenraums und des Fahrzeugaußenraums auf einer gemeinsamen Darstellungseinrichtung ist von Vorteil, wenn die aneinandergrenzenden Teilbereiche einander benachbart dargestellt sind. Besonders vorteilhaft ist es indes, wenn die Darstellung des Fahrzeuginnenraums und des Fahrzeugaußenraums auf der einen Darstellungseinrichtung unmittelbar ineinander übergehen.

Um die Einschätzung der Situation durch den die Darstellung betrachtenden Fahrzeugführer vorteilhaft zu erleichtern kann, zumindest an den aneinandergrenzenden Teilbereichen, eine in einem Speicher hinterlegte Fahrzeugkontur in die Darstellung einblendbar sein.

Von besonderem Vorteil ist es, wenn die Darstellung des Fahrzeugaußenraums eine wenigstens einen Teil des Fahrzeugaußenraums umfassende Ansicht aus einer definiert vorgegebenen Perspektive, insbesondere der Vogelperspektive, ist und die Darstellung des Fahrzeuginnenraums ebenfalls eine wenigstens einen Teil des Fahrzeuginnenraums umfassende Ansicht aus einer der Perspektive des Fahrzeugaußenraums entsprechenden Perspektive, insbesondere aus der Vogelperspektive, ist.

Zur ausreichenden Darstellung des Fahrzeuginnenraums sowie des Fahrzeugaußenraums ist es vorteilhaft, bei schlechten Lichtverhältnissen Kameras mit Nachtsichteigenschaft vorzusehen, wobei diese Nachtsichteigenschaft bevorzugt automatisch bei schlechten Lichtverhältnissen aktivierbar und/ oder manuell zuschaltbar ist.

In speziellen Fällen kann es von Vorteil sein, wenn die Innenkameraanordnung und/ oder die Außenkameraanordnung den Fahrzeuginnenraum und/ oder den Fahrzeugaußenraum in einem Winkel von 360 Grad bzw. vollständig parallel zur Bewegungsebene des Fahrzeugs erfassen. Dies ist insbesondere dann der Fall, wenn mehrere Einstiege auf den Umfang des Fahrzeugs verteilt sind oder wenn das Fahrzeug von mehreren Seiten be- bzw. entladen werden kann.

In Abhängigkeit von der Größe des Fahrzeugs kann es von Vorteil sein, dass der gesamte Fahrzeuginnenraum und der das Fahrzeug umgebende gesamte Fahrzeugaußenraum, bis zu einer vorgebbaren Entfernung vom Fahrzeug jeweils aus einer gemeinsamen Perspektive, insbesondere aus der Vogelperspektive, auf einer gemeinsamen Darstellungseinrichtung darstellbar sind, derart, dass die Darstellungen in den Bereichen, in denen Fahrzeuginnenraum und Fahrzeugaußenraum in der Darstellung unmittelbar aneinandergrenzen, maßstäblich und perspektivisch für den Betrachter keine erkennbaren Unterschiede aufweisen.

Bei großen Fahrzeugen einerseits oder bei in der Darstellungsgröße beschränkten Darstellungseinrichtungen andererseits sind erfindungsgemäß sowohl für die Darstellung des Fahrzeuginnenraums als auch für die Darstellung des Fahrzeugaußenraums Teilbereiche auswählbar und jeweils aus der gemeinsamen Perspektive, insbesondere aus der Vogelperspektive, auf einer gemeinsamen Darstellungseinrichtung darstellbar. Die Darstellung erfolgt dabei in den Bereichen, in denen Fahrzeuginnenraum und Fahrzeugaußenraum in der Darstellung unmittelbar aneinandergrenzen, maßstäblich und perspektivisch bevorzugt so, dass für den Betrachter keine oder keine wesentlichen Unterschiede erkennbar sind.

Sowohl bei der Gesamtdarstellung, als auch bei der Teildarstellung ist es von Vorteil, dass an den in der Darstellung unmittelbar aneinandergrenzenden Bereichen eine in einem Speicher vorgehaltene Fahrzeugkontur in die Darstellung einblendbar ist, um Innenbereich und Außenbereich klar erkennbar gegeneinander abzugrenzen. Auf diese Weise wird für den Fahrzeugführer leicht erkennbar, ob sich Personen oder Gegenstände im Gefahrenbereich befinden.

Das von der Innenraumkameraanordnung und/ oder der Außenraumkameraanordnung gelieferte Bild ist zum Beispiel ein Realbild. Zur Vereinfachung der Darstellung im Sinne einer besseren Einschätzbarkeit durch den Fahrzeugführer, kann es bei Vorliegen komplexer Situationen von Vorteil sein, dass das von der Innenraumkameraanordnung und/ oder der Außenraumkameraanordnung gelieferte Realbild wenigstens zum Teil mittels einer Recheneinheit in eine virtuelles Bild umgerechnet wird und/oder wenigstens zum Teil durch ein aus Sensordaten (zum Beispiel aus Sensordaten einer Sitzbelegungserkennung, um nur ein konkretes Beispiel aufzuzeigen) abgeleitetes virtuelles Bild ersetzt wird. Unter einem virtuellen Bild wird im vorliegenden Fall ein Bewegtbild verstanden, das an Stelle der realen Bildinhalte veränderte Bildinhalte zeigt. Dabei kann es sich um eine veränderte Perspektive, um einfache grafische Symbole an Stelle der Objekte - Personen oder Gegenstände - im Realbild, um farbliche Veränderungen des Realbildes oder der darin enthaltenen Objekte, um eine dreidimensionale Darstellung oder um eine Mischung aus den vorstehend aufgeführten Darstellungsformen handeln. Das virtuelle Bild kann entweder an Stelle des Realbildes oder überblendet mit diesem auf der Darstellungseinrichtung angezeigt werden. Vorteilhaft kann dabei unter Zuhilfenahme von Schaltmitteln zwischen unterschiedlichen Darstellungsformen umgeschaltet werden.

Erfindungsgemäß ist eine Verkehrssituationsanalyseeinrichtung vorgesehen, die die Verkehrssituation unter Nutzung des Bildstroms und gegebenenfalls unter Nutzung weiterer im Fahrzeug vorhandener Sensorik analysiert und in Abhängigkeit von der ermittelten Situation auf die Innenraumkameraanordnung und/ oder Außenraumkameraanordnung und/ oder Darstellungseinrichtung steuerungstechnisch einwirkt, derart, dass die Innenraumdarstellung und/ oder die Außenraumdarstellung situationsabhängig erfolgt. So ist es beispielsweise möglich, während der Fahrt den Innen- und Außenraum eines Reisebusses in grafischer Darstellung darzustellen. Selbstverständlich sind auch gemischte Darstellungsformen denkbar, zum Beispiel der Innenraum in grafischer Darstellung und der Außenbereich im Realbild. Es können natürlich beliebige andere Darstellungskombinationen situationsabhängig gewählt werden.

Erfindungsgemäß wird der von der Darstellungseinrichtung darzustellende Bildstrom mittels einer Bildstromanalyseeinheit einer Objektanalyse unterzogen. Durch diese Maßnahme lassen sich relativ zum Fahrzeug bewegende Objekte sowohl im Fahrzeuginnenraum als auch im Fahrzeugaußenraum ermitteln. Die Bildstromanalyseeinheit wirkt dabei auf die Darstellungseinrichtung so ein, dass die sich bewegenden Objekte in der Darstellung kenntlich gemacht sind. Auf diese Weise lassen sich die bewegten Objekte klarer von den in Ruhe befindlichen Objekten unterscheiden. Erfindungsgemäß ermittelt die Bildstromanalyseeinheit für die sich bewegenden Objekte jeweils einen Bewegungsvektor und wirkt diese auf die Darstellungseinrichtung so ein, dass diese die Bewegungsrichtung in Verbindung mit dem jeweiligen Objekt darstellt. Auf diese Weise lassen sich zum Beispiel Fahrgäste in einem Bus, die auf einen Ausstieg zustreben, deutlich von denen unterscheiden, die ihren Platz beibehalten.

Zur Anwendung kommt das erfindungsgemäße Verfahren bei Fahrzeugen, insbesondere bei Nutzfahrzeugen.

Weitere Ausgestaltungen und Vorteile der Erfindung werden nachfolgend anhand der Zeichnungen näher erläutert, es zeigen:
- Fig. 1a: Eine Prinzipdarstellung eines Stadtbusses an einer Haltestelle aus der Vogelperspektive
- Fig. 1b: Prinzipdarstellung eines Stadtbusses mit Kameraanordnung in Seitenansicht
- Fig. 1c: Prinzipdarstellung einer Kameraanordnung mit Darstellungseinrichtung in Funktionsblöcken
- Fig. 2a, 2b: Ein erstes Beispiel zur Darstellung der unter Fig. 1a gezeigten Situation
- Fig. 3: Ein zweites Beispiel zur Darstellung der unter Fig. 1a gezeigten Situation
- Fig. 4: Ein drittes Beispiel zur Darstellung der unter Fig. 1a gezeigten Situation
- Fig. 5: Ein Beispiel zur Darstellung der unter Fig. 1a gezeigten Situation mit integrierter Bewegungsanalyse und Darstellung
- Fig. 6a: Eine Prinzipdarstellung eines LKW der Ladung aufnehmen will
- Fig. 6b: Ein Beispiel zur Darstellung der unter Fig. 6a gezeigten Situation aus der Vogelperspektive

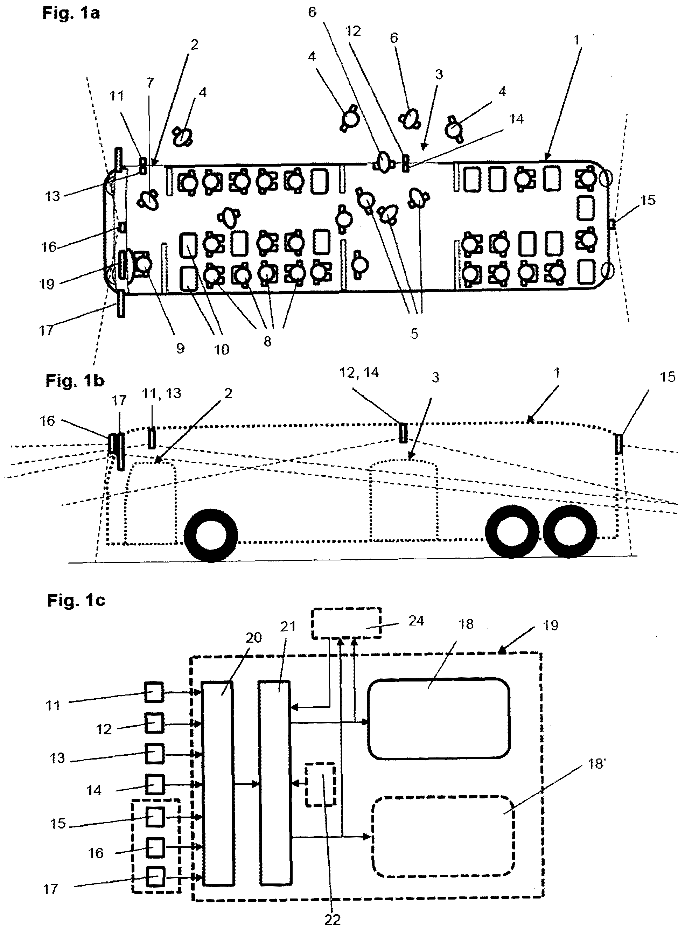

Um für die weitere Beschreibung eine Basis zu bilden, ist zunächst in Fig. 1a in einer Prinzipdarstellung ein Stadtbus 1 gezeigt, der sich an einer Haltestelle befindet und aus dem Personen aussteigen bzw. in den Personen zusteigen. Dargestellt ist der Stadtbus 1 mit freier Einsicht in den Fahrgastraum. Die vordere Tür 2 und die hintere Tür 3 sind bereits geöffnet. Im Bereich neben dem Stadtbus 1 befinden sich zusteigewillige Personen 4, aussteigende Personen 6 und im Bus aussteigewillige Personen 5, eingestiegene Personen 7, auf Sitzplätzen sitzende Personen 8 sowie der Busfahrer 9, darüber hinaus weist der Bus freie Sitzplätze 10 auf. In der Darstellung gemäß Fig. 1a und auch in den nachfolgenden Figuren, sind nicht alle gleichartigen Objekte mit Bezugszeichen versehen, um die Übersichtlichkeit der Darstellung zu wahren. Zur Ermöglichung des Einblicks des Fahrers 9 in die aufgrund des Zu- und Aussteigens von Personen unfallträchtigen Bereiche an den Türen 2, 3, sind eine erste Außenraumkamera 11, eine zweite Außenraumkamera 12, eine erste Innenraumkamera 13 und eine zweite Innenraumkamera 14 vorgesehen. Ergänzend dazu können sich am Heck des Stadtbusses 1 eine Heckkamera 15 und an dessen Front eine Frontkamera 16 befinden. Ebenfalls ergänzend kann an der den Türen 2, 3 abgewandten Seite eine weitere Außenraumkamera 17, zum Beispiel im Außenspiegel des Fahrzeugs vorgesehen sein. Den von den erwähnten Kameras 11 bis 17 aufgenommenen Bildstrom erhält der Fahrer 9, nach Verarbeitung der Bildsignale durch eine Darstellungseinrichtung 19, auf einem dieser Darstellungseinrichtung 19 zugeordneten Bildschirm 18, 18' zugespielt. Der dem Fahrer dargestellte Bildstrom ist dabei so gestaltet, dass dieser das Geschehen an den Türen 2, 3 unmittelbar beurteilen und seine Handlungsweise daran ausrichten kann. Die Aufnahmewinkel der Kameras 11 bis 17 sind, mit jeweils gestrichelten Linien, in den Fig. 1a und 1b beispielhaft sichtbar gemacht, wobei die zur Abbildung der Türbereiche vorgesehenen Außenkameras 11, 12 und Innenraumkameras 13, 14 wie auch die Heckkamera 15 und die Frontkamera 16 von oben auf das Szenario gerichtet sind. Es ist jedoch ausdrücklich darauf hinzuweisen, dass die Aufnahmewinkel und die Ausrichtung, je nach Art der verwendeten Kamera, von der Darstellung in den Fig. 1a und 1b vollständig abweichen können. Weiter ist darauf hinzuweisen, dass auch die Anzahl der verwendeten Kameras von der in den Fig. 1a und 1b gezeigten abweichen kann, insbesondere, wenn ihre Abbildungseigenschaften andere sind, als die in diesem Beispiel dargestellten. Ebenso können die Orte, an denen die Kameras am Fahrzeug angebracht sind, je nach Art der eingesetzten Kameras, völlig anders gewählt sein.

Um die in Verbindung mit Fig. 1a geschilderten Verhältnisse weiter zu verdeutlichen, ist in der Prinzipdarstellung gemäß Fig. 1b der bereits erwähnte Stadtbus 1 in Seitenansicht dargestellt, wobei die Konturen des Stadtbusses 1, ebenso wie die Konturen der vorderen Tür 2 und der hinteren Tür 3, in Strichlinie gehalten, nur angedeutet sind. Wie in der Darstellung verdeutlicht, befinden sich die Frontkamera 16, die erste Außenraumkamera 11, die erste Innenraumkamera 13, die zweite Außenraumkamera 12, die zweite Innenraumkamera 14, die Heckkamera 15, die Frontkamera 16 und die weitere Seitenkamera 17 im Dachbereich des Stadtbusses 1 und sind nach unten gerichtet, so dass sie die jeweiligen Bereiche in einer Sicht von oben, also aus der Vogelperspektive abbilden.

Um nun aus den jeweils von den Kameras 11 bis 17 aufgenommenen Bildströmen ein Bild zu erzeugen, bevorzugt ein solches Bild, bei dem die Darstellungsbereiche des Fahrzeuginnenraums und des Fahrzeugaußenraums, zumindest an den aneinander grenzenden Teilen, also an den Türen 2, 3, ohne bzw. ohne nennenswerte erkennbare Änderung von Maßstab und Perspektive dargestellt sind, gibt es eine Reihe von Möglichkeiten. Einige dieser Möglichkeiten sind weiter unten, in Verbindung mit der in Fig. 1c gezeigten Prinzipdarstellung einer Kameraanordnung mit Darstellungseinrichtung, ausführlich beschrieben. In dieser Fig. 1c sind Funktionsblöcke dargestellt, die entweder als Hardware vorhanden sind oder durch eine Recheneinheit in Verbindung mit Programmen temporär ausgebildet werden. Recheneinheiten der infrage kommenden Art sind in Fahrzeugen seit langem für unterschiedlichste Aufgaben im Einsatz, so dass sich weiterführende Ausführungen hierzu erübrigen.

Für die Darstellung werden die Bildströme der Kameras 11 bis 17, wie in Fig. 1c gezeigt, einer Darstellungseinrichtung 19 zugeleitet. Je nach Art und Anzahl der verwendeten Kameras und ihrer jeweiligen Abbildungseigenschaften kann die Darstellungseinrichtung 19 unterschiedlich ausgebildet sein. Sind die Kameras in Ihren Abbildungseigenschaften unterschiedlich, bedarf es in der Regel einer Entzerrungseinheit 20 und einer Überlagerungseinheit 21, damit die Bildströme der Kameras 11 bis 17 entzerrt und überlagert in der angestrebten Darstellung auf dem Bildschirm 18 wiedergegeben werden können. Als Entzerrungseinheit 20 ist eine Einrichtung zu verstehen, mit der der Bildstrom einer Kamera, in der Regel durch Koordinatentransformation, so umgerechnet wird, dass durch die jeweils verwendete Optik (Linsen, Spiegel) verursachte Verzerrungen beseitigt werden und ein für alle Bildströme einheitlicher Abbildungsmaßstab hergestellt wird. Die nachgeschaltete Überlagerungseinheit 21 entnimmt jeweils bestimmte Bildbereiche aus den jeweiligen Bildströmen und setzt diese zu einem neuen vollständigen Bild zusammen, das dann auf dem Bildschirm 18, 18' zur Darstellung kommt. Unter dem Begriff Bildschirm sollen dabei alle Einrichtungen (CRT, TFT, LCD usw.) verstanden werden, die zur Darstellung eines Bildstroms geeignet sind.

Sind die Abbildungseigenschaften einer jeweiligen Außenraumkamera-Innenraumkamerakombination jedoch gleich und ist ihre Ausrichtung entsprechend gewählt, kann es in diesem einfachsten Fall genügen, entsprechende Bildausschnitte jeweils auf einen ersten Bildschirm 18 für die Außenkamera und einen zweiten unmittelbar benachbarten Bildschirm 18' für die Innenraumkamera darzustellen. Gemäß dem Beispiel nach Fig. 1a würde also der Bildstrom der ersten Außenraumkamera 11 auf dem Bildschirm 18 und der Bildstrom der ersten Innenraumkamera 13 auf dem Bildschirm 18' dargestellt. Die Bildausschnitte sind dabei so gewählt, dass die beiden Darstellungen an den beiden benachbarten Bildschirmseiten quasi ineinander übergehen. Sollen beide Bildausschnitte hingegen auf einem gemeinsamen Bildschirm dargestellt werden, wird dies mit Hilfe der Überlagerungseinheit 21 bewerkstelligt, die das überlagerte Bild auf einem Bildschirm 18 darstellt.

Soll dem Fahrer 9 (Fig. 1a) auf dem Bildschirm 18 eine Darstellung geboten werden, die in etwa der Darstellung gemäß Fig. 1a entspricht, so dass sowohl der Fahrzeuginnenraum, als auch der Fahrzeugaußenraum und die Fahrzeugkontur in der Darstellung enthalten sind, bedarf es neben der Bildentzerrung durch die Entzerrungseinheit 20 und der Bildüberlagerung durch die Überlagerungseinheit 21, einer zusätzliche Überlagerung des aus den beiden Bildströmen erzeugten überlagerten Bildes mit einer aus einem Speicher 22 entnommenen Fahrzeugkontur. Auch diese zusätzliche Überlagerung kann mittels der Überlagerungseinheit 21 durchgeführt werden.

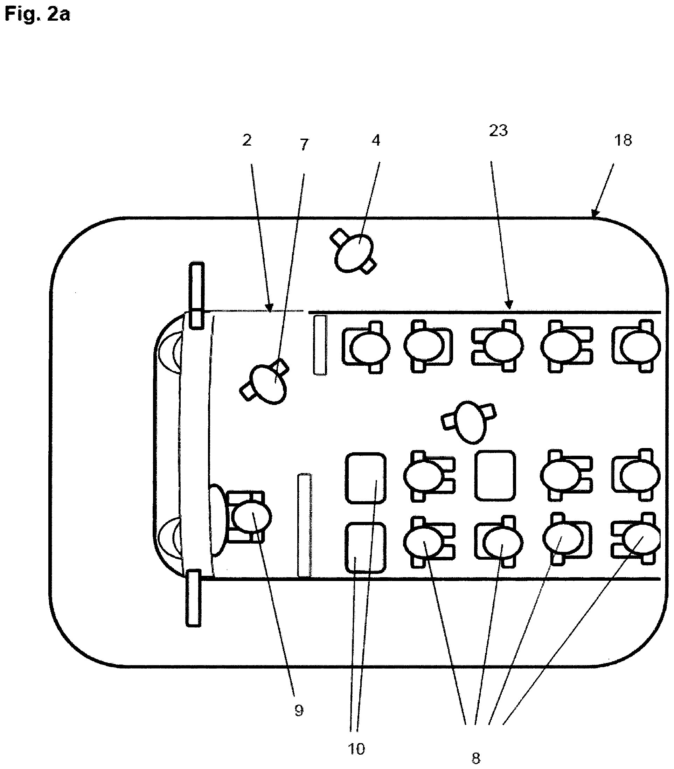

Es ist an dieser Stelle darauf hinzuweisen, dass es sich bei der Darstellung der vorstehend angesprochenen Bildschirminhalte, bis auf die dem Speicher 22 entnommene und damit künstlich erzeugte Fahrzeugkontur zum Beispiel um Realbilder handelt, die gegebenenfalls einer Entzerrung und/ oder Überlagerung und evtl. einer zusätzlichen Perspektivenumrechnung (durch die Entzerrungseinheit 22) unterworfen wurden. Insoweit sind die Darstellungen von Bildschirminhalten in den nachfolgend beschriebenen Fig. 2a, 2b, 3, 4, 5 und 6b als schematische Darstellungen eines Realbildes zu verstehen, soweit nichts anderes erwähnt ist. Selbstverständlich besteht die Möglichkeit diese realen Bildinhalte mit weiteren künstlich erzeugten, nachfolgend als virtuell bezeichneten Bildinhalten überlagert darzustellen. Hierauf wird weiter unten noch näher eingegangen. Ebenso besteht die Möglichkeit, dass das gelieferte Bild ein rein virtuelles Bild ist, das zum Beispiel aus Sensordaten abgeleitet ist, zum Beispiel aus Sensordaten einer Sitzbelegungserkennung abgeleitet ist, um nur ein konkretes Beispiel aufzuzeigen.

Im Folgenden soll auf der Basis des in den Fig. 1a und 1b gezeigten Szenarios und der in Fig. 1c gezeigten Anordnung beschrieben werden, wie die Darstellung gemäß der erfindungsgemäßen Verfahrensweise erfolgt.

In Verbindung mit dem in Fig. 2a gezeigten Beispiel ist angenommen, dass die erste Außenraumkamera 11 und die erste Innenraumkamera 13 jeweils einen Bildstrom an die Entzerrungseinheit 20 liefern. Dort wird die ankommende Bildinformation entzerrt, so dass sich jeweils eine ebene Abbildung "senkrecht von oben" ergibt. Im nächsten Schritt erfolgt eine Überlagerung der entzerrten Bildströme und eine Überlagerung mit der im Speicher 22 vorgehaltenen Fahrzeugkontur 23. Bereiche, die die Innenraumkamera 13 nicht erfasst, können als Fahrzeugkontur aufgefasst und entsprechend dargestellt werden. Die Darstellung des überlagerten Bildstroms erfolgt auf dem Bildschirm 18, wie in Fig. 2a schematisch dargestellt, als Realbild mit eingeblendeter Fahrzeugkontur 23. In der Darstellung sind eine zusteigewillige Person 4, eine bereits zugestiegene Person 7, die vordere Tür 2, leere Sitzplätze 10, auf Sitzplätzen sitzende Personen 8 sowie die Fahrzeugkontur 23 erkennbar. Aufgrund der Anzeige auf dem Bildschirm 18 erkennt der Fahrer, dass, für ihn nicht direkt sichtbar, weil hinter der Tür 2 befindlich, noch eine Person zusteigen will. Er kann also erkennen, dass die Tür 2 nicht geschlossen werden darf und nicht angefahren werden darf, um die zusteigewillige Person 4 nicht zu gefährden. Darüber hinaus erkennt der Fahrer, dass noch Plätze frei sind und kann dieser zusteigende Fahrgäste darauf hinweisen.

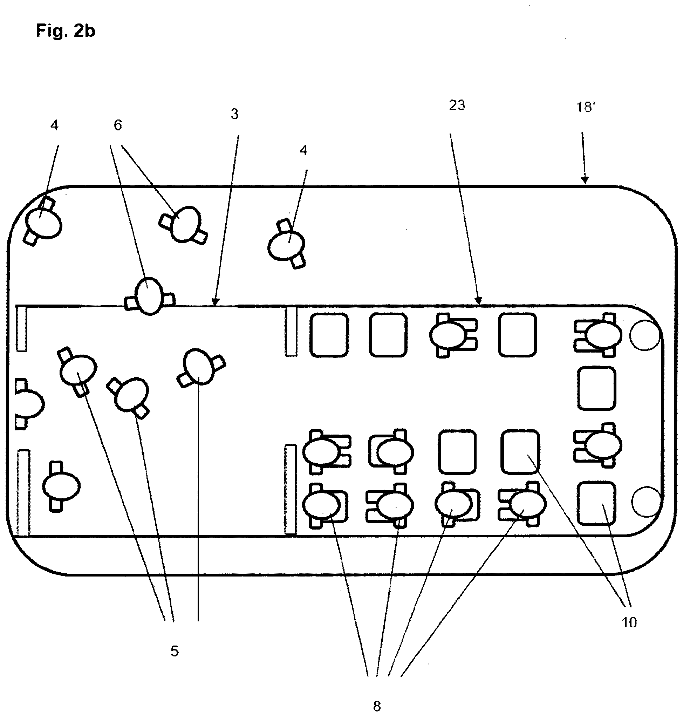

Da, wie in Fig. 1a gezeigt, neben der vorderen Tür 2 auch eine hintere Tür 3 vorhanden ist, erfolgt die Anzeige dieses Bereichs, wie in Fig. 2b dargestellt, auf einem zweiten Bildschirm 18'. Die Vorgehensweise ist dabei identisch zu der vorhergehend beschriebenen. Auch hier wird der jeweils von der Außenraumkamera 12 und der Innenraumkamera 14 gelieferte Bildstrom mittels der Entzerrungseinheit 20 entzerrt, in der Überlagerungseinheit 21 überlagert und die Fahrzeugkontur 23 aus dem Speicher 22 durch Überlagerung hinzugefügt. Die Darstellung erfolgt, wie bereits ausgeführt auf einem zweiten Bildschirm 18' in Draufsicht von oben, also in der Vogelperspektive, so dass der Fahrer einerseits aussteigewillige Personen 5, aussteigende Personen 6 und zusteigewillige Personen 4, auf Sitzplätzen sitzende Personen 8 und freie Plätze 10 erkennen kann. Die Aufteilung der Darstellung auf zwei Bildschirme, im vorstehenden Beispiel die Bildschirme 18, 18', ist dann sinnvoll, wenn die verfügbare Bildschirmgröße relativ klein ist und, bei einer Darstellung beider Einstiege auf nur einem Bildschirm, für den Fahrer eine Einschätzung der Situation nicht oder nur schwer möglich wäre. Abweichend vom Beispiel nach den Fig. 2a, 2b kann natürlich die Darstellung auch auf einem Bildschirm im zeitlichen Wechsel erfolgen. In einem solchen Fall lassen sich die Türen durch steuerungstechnische Verriegelung vom Fahrer nur dann schließen, wenn der jeweilige Türbereich für ihn auf dem Bildschirm einsehbar dargestellt ist.

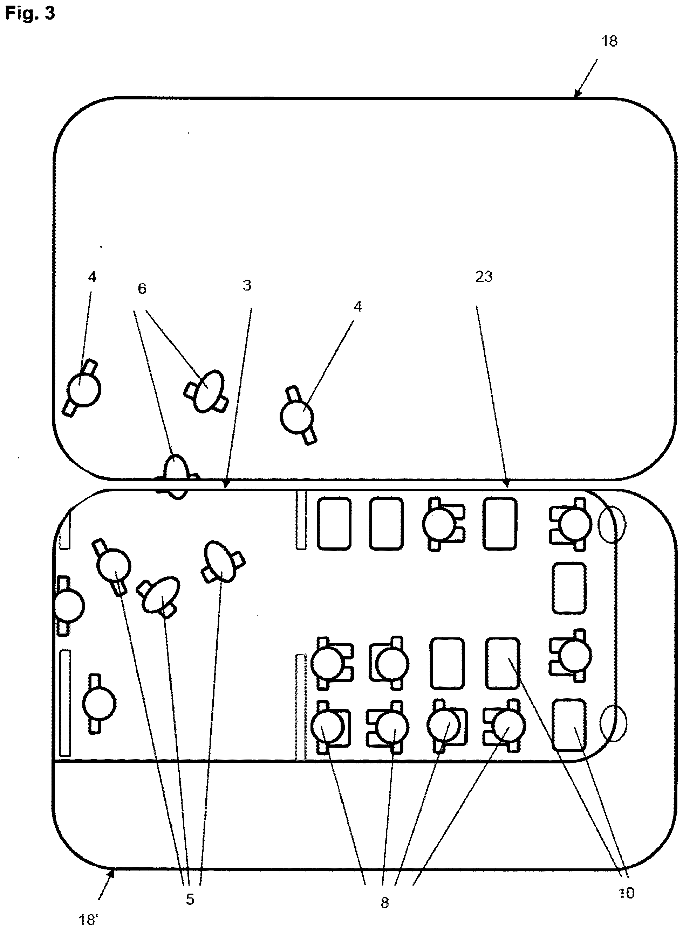

Eine weitere Variante des erfindungsgemäßen Verfahrens zeigt Fig. 3. Hier wird der oben bereits angesprochene einfachste Fall der Darstellung herangezogen. Vorausgesetzt ist, dass die Außenraumkamera 12 und die Innenraumkamera 14, wie in den Fig. 1a und 1b gezeigt, jeweils von oben auf den Türbereich (hintere Tür 3) gerichtet sind. Weiter ist vorausgesetzt, dass die Abbildungseigenschaften beider Kameras gleich sind, so dass eine direkte Kombination der Bildströme in der Weise möglich ist, dass beide Bildströme auf getrennten, zueinander benachbarten Bildschirmen 18, 18' so darstellbar sind, dass die Darstellung an den Bildschirmseiten die zueinander benachbart sind, scheinbar ineinander übergehen. Hierzu ist es lediglich notwendig, dass die dargestellten Bildausschnitte aus den beiden Bildströmen entsprechend ausgewählt sind. Wird so vorgegangen, ergibt sich die in Fig. 3 gezeigte Darstellung. Sowohl die zusteigewilligen Personen 4, als auch die aussteigewilligen Personen 5 und die aussteigenden Personen 6 sind im Bereich der hinteren Tür 3 erkennbar. Natürlich kann auch die Fahrzeugkontur 23 durch Überlagerung des Bildstroms der Innenraumkamera 14 mit einer aus dem Speicher 22 entnommenen, die Fahrzeugkontur abbildenden Information, mittels der Überlagerungseinheit 21 eingefügt werden, wie dies die Darstellung nach Fig. 3 zeigt.

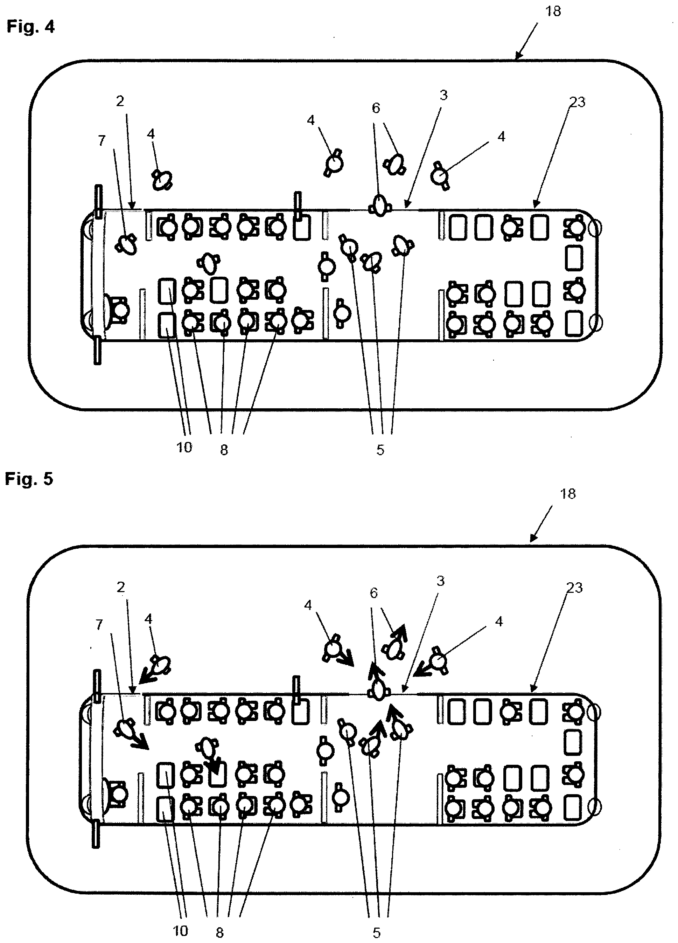

Als ideal zu betrachten ist es, wenn der gesamte Fahrzeuginnenraum und der das Fahrzeug umgebende Außenraum bis zu einer vorgebbaren Entfernung zum Fahrzeug, aus der Vogelperspektive dargestellt werden. Ein solches Beispiel ist in Fig. 4 gezeigt. Bei diesem Beispiel kommen alle in Fig. 1a gezeigten Kameras 11 bis 17 zum Einsatz. Die jeweiligen Bildströme werden von der Entzerrungseinheit 20 entzerrt, so dass sich eine ebene Draufsicht von oben ergibt, dann erfolgt die Überlagerung der Bildströme in der Überlagerungseinheit 21 in der Weise, dass aus den jeweiligen Bildströmen bestimmte Bereiche extrahiert und zu einem neuen Bildstrom zusammengesetzt werden. Es ergibt sich so ein Bildstrom, der das Fahrzeug mit den darin befindlichen Fahrgästen in seiner Umgebung als Realbild zeigt. Sodann erfolgt die Überlagerung mit der aus dem Speicher 22 entnommenen, die Fahrzeugkontur 23 abbildenden Information mittels der Überlagerungseinheit 21 und die Darstellung des mit der Fahrzeugkontur 23 überlagerten Bildstroms auf dem Bildschirm 18. In dem hier beschriebenen Ausführungsbeispiel nach Fig. 4 hat der Fahrer den Überblick über das gesamte Fahrzeug. Er sieht sowohl den Fahrzeuginnenraum, als auch den Fahrzeugaußenraum im Realbild von oben aus der Vogelperspektive, hat also Einblick in das gesamte Geschehen im Fahrzeug und um das Fahrzeug herum. Dabei sind einsteigewillige Personen 4, aussteigewillige Personen 5, aussteigende Personen 6, auf Sitzplätzen sitzende Personen 8 und leere Sitzplätze 10 ebenso erkennbar, wie evtl. sich dem Fahrzeug nähernde andere Fahrzeuge (nicht dargestellt).

In Weiterbildung des in Verbindung mit Fig. 4 geschilderten Verfahrens kann vorgesehen sein, den Bildstrom, bevor er dem Bildschirm 18 zugeleitet wird, mittels einer Bildstromanalyseeinheit 24 einer Situationsanalyse zu unterziehen, derart, dass sich bewegende Objekte - im Beispiel nach Fig. 5 insbesondere die aussteigenden Personen 6, aber auch zusteigewillige Personen 4 und austeigewillige Personen 5 - ermittelt und kenntlich gemacht werden. Dabei erfolgt die Identifizierung der sich bewegenden Objekte durch eine Bewegungsanalyse zum Beispiel in der Weise, dass aufeinanderfolgende Bilder aus dem Bildstrom miteinander verglichen, und sich bewegende Bildinhalte isoliert und als bewegtes Objekt klassifiziert werden. Dem bewegten Objekt können dann, zum Beispiel durch entsprechende Farbgebung, Farben zugeordnet werden, so dass die bewegten Objekte als virtuelles Bewegtbild mit dem realen Bewegtbild überlagert auf dem Bildschirm 18 erscheinen oder, an Stelle der realen Objekte, als virtuelle Bestandteile des realen Bewegtbildes dargestellt werden. Durch diese Maßnahme kann sich der Fahrer auf die Personen konzentrieren, die in Bewegung sind, also eine potenzielle Unfallgefahr darstellen.

Weitergebildet werden kann das vorstehend geschilderte Verfahren zur Darstellung bewegter Objekte dadurch, dass mittels der Auswertung mehrerer aufeinanderfolgender Bilder des Bildstroms durch die Bildstromanalyseeinheit 24, den als bewegt klassifizierten Objekten ein Bewegungsvektor zugeordnet wird. Auf dem Bildschirm 18 werden diese Objekt dann in Verbindung mit ihrem Bewegungsvektor dargestellt. Eine entsprechende Darstellung ist in Fig. 5 gezeigt. Dort ist den bewegten Objekte, nämlich den aussteigenden Personen 6, den einsteigenden Personen 7 sowie auf die Türen zueilenden einsteigewilligen Personen 4 und aussteigewilligen Personen 5 ein die Bewegungsrichtung anzeigender Pfeil in farblicher Hervorhebung zugeordnet. Durch dieses Vorgehen ist es dem Fahrer möglich zu erkennen, ob sich eine Person auf den Gefahrenbereich zu oder von diesem weg bewegt.

Für alle vorstehend beschriebenen Darstellungsbeispiele besteht die Möglichkeit, einen Gefahrenbereich zu definieren und eine entsprechende grafische Darstellung dieses Gefahrenbereichs gewissermaßen als Teil der Fahrzeugkontur, im Speicher 22 vorzuhalten und beispielsweise situationsabhängig, zum Beispiel beim Anhalten an einer Haltestelle, auf dem Bildschirm 18, 18' mit anzuzeigen. Hierdurch kann der Fahrer die gezeigte Situation noch besser einschätzen. Wird, wie oben beschrieben, eine Objektanalyse durchgeführt, können vom Fahrer ausgelöste Vorgänge, wie des Schließen von Türen oder das Anfahren des Fahrzeugs steuerungstechnisch verhindert werden, wenn sich ein oder mehrere Objekte im Gefahrenbereich befinden oder sich diesem annähern. Feststellen lässt sich dies durch entsprechende Auswertung des darzustellenden Bildstroms mittels der Bildstromanalyseeinheit 24.

Das vorstehend in Verbindung mit einem Stadtbus beschriebene Verfahren kann natürlich bei jeder Art von Personenbeförderungsmittel eingesetzt werden, so insbesondere auch bei Zügen, Straßenbahnen, Seilbahnen, Schiffen usw.. Dabei muss der Bildschirm 18, 18' nicht unbedingt dem Fahrer zur Einsichtnahme zugeordnet sein, sondern einer für den sicheren Ein- und Ausstieg von Passagieren verantwortlichen Person, die hier allgemein mit Fahrzeugführer bezeichnet wird. Der Bildschirm 18, 18' kann sich demnach an einem anderen Ort als dem Cockpit des Fahrzeugs befinden. Auch ein Ort außerhalb des Fahrzeugs ist denkbar.

Wie bereits eingangs beschrieben, beschränkt sich das erfindungsgemäße Verfahren nicht nur auf Fahrzeuge zur Personenbeförderung, sondern allgemein auch auf solche zur Lastenbeförderung. Dort tritt das Problem auf, dass Personen und gegebenenfalls Fahrzeuge zum Transport von Gütern, wie zum Beispiel Gabelstapler, an der Grenze zwischen Fahrzeuginnenraum und Fahrzeugaußenraum zum Be- und Entladen agieren, oder sich Güter in diesem Bereich befinden. Es wird daher im Folgenden auf eine typische Situation eingegangen, wie sie täglich im Gütertransport eintritt.

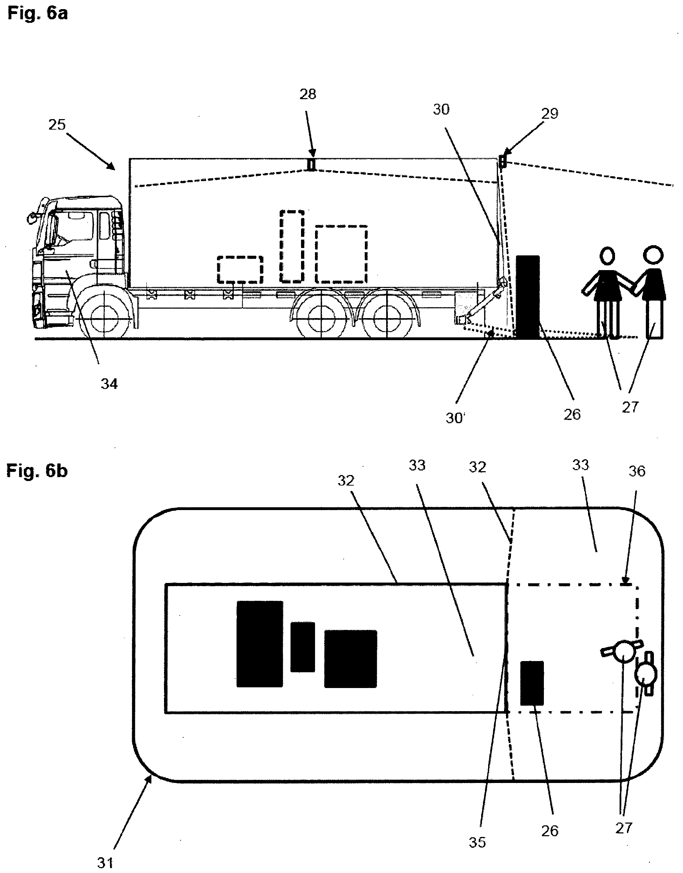

Fig. 6a zeigt einen Lastkraftwagen (LKW) 25, mit einer Hebebühne 30 die geschlossen ist. Außerhalb des LKW 25 befinden sich ein Packstück 26 und Personen 27. Der LKW 25 soll das Packstück 26 aufnehmen und ist rückwärts an dieses herangefahren, wie unschwer in der Darstellung erkennbar jedoch zu weit. Um in einer solchen Situation Unfälle, zum Beispiel durch das Herablassen der Hebebühne 30 zu vermeiden, war es bisher notwendig, die Hebebühne 30 außerhalb des Fahrerhauses an einer Stelle zu bedienen, die die Einsicht in den Gefahrenbereich gestattet. Das Aussteigen des Fahrers ist jedoch nicht nur unbequem, sondern auch unökonomisch. Um den Verbleib des Fahrers im Fahrerhaus 34 während des Ladevorgangs zu ermöglichen wird eine Kombination aus einer Innenraumkamera 28 und einer Außenraumkamera 29 vorgesehen, wobei die aufgenommenen Bildströme ein Bild erzeugen, derart, dass die Darstellungsbereiche des Fahrzeuginnenraums und des Fahrzeugaußenraums zumindest an den aneinandergrenzenden Teilen - also gemäß dem Beispiel nach Fig. 6a an der hinteren Laderaumgrenze 32 - ohne erkennbare Änderung von Maßstab und Perspektive dargestellt sind.

Die Kameras 28, 29 sind dabei von oben auf den Arbeitsbereich 33 gerichtet, der die Ladefläche des LKW 26 und den Bereich, der die abgesenkte Hebebühne 30' (gestrichelt dargestellt) und den diese umgebenden Raum bis zu einer vorgegebenen Entfernung einschließt, umfasst. Um nun eine sichere Beobachtung des Anfahr- und Ladevorgangs zu gestatten, kann unterschiedlich vorgegangen werden, wie dies bereits zu den vorstehenden Beispielen nach den Fig. 1 bis 5 beschrieben wurde. Es soll, um Wiederholungen zu vermeiden, deshalb nur die nahtlose Darstellung des oben angesprochenen Arbeitsbereiches kurz beschrieben werden.

Die Kameras 28, 29, die den mit der Arbeitsbereichsgrenze 32 definierten Arbeitsbereich 33 aufnehmen, übergeben jeweils ihren Bildstrom an eine Entzerrungseinheit (analog der oben beschriebenen). Diese erzeugt aus diesen beiden Bildströmen je einen entzerrten und im Maßstab an den späteren Bildstrom für den gesamten Arbeitsbereich 33 angepassten Bildstrom. In der nachgeordneten Überlagerungseinheit (in ihrer Ausführung analog zu der oben beschriebenen) werden die beiden Bildströme einander so überlagert, dass sich ein nahtloser Übergang zwischen dem Innenbereich und dem Außenbereich an der hinteren Laderaumkante 35 ergibt. Weiter wird dem nunmehr gemeinsamen Bildstrom eine aus einem Speicher entnommene Kontur überlagert, die den Laderaum und einen Bereich umfasst, der der abgesenkten Hebebühne 30' entspricht. Der so erzeugte Bildstrom wird dem im LKW 25 befindlichen Fahrer auf einem Bildschirm 31 im Fahrerhaus 34 des LKW 26 präsentiert. Die Darstellung auf dem Bildschirm 31 entspricht dabei in ihrer Form der in Fig. 6b schematisch dargestellten, ist aber ein mit der angesprochenen Kontur überlagertes Realbild.

Ergänzend und weiterbildend kann auch hier vorgesehen sein, eine Objektanalyse, dieser nachgeordnet eine Bewegungsanalyse und gegebenenfalls die Zuordnung eines Bewegungsvektors zu den Objekten durchzuführen und jeweils eine entsprechende Darstellung auf dem Bildschirm zu erzeugen, wie dies vorstehend in Verbindung mit der Darstellung in Fig. 5 beschrieben ist. Weiter lässt sich natürlich ein Gefahrenbereich 36, zum Beispiel der Aktionsbereich der Hebebühne 30, 30' definieren, wobei dann, wenn sich Objekte in diesem Gefahrenbereich 36 befinden und/ oder sich diesem Gefahrenbereich 36 annähern, vordefinierte Vorgänge, wie das Bewegen des LKW 26, steuerungstechnisch unterbunden werden.

Ebenfalls ergänzend und weiterbildend kann bei allen vorstehenden Beispielen eine Verkehrssituationsanalyseeinrichtung (nicht dargestellt) vorgesehen sein, die die Verkehrssituation aus den von den Kameras erzeugten Bildströmen und gegebenenfalls den Daten von weitere Sensoren, wie Abstandsradar, GPS in Verbindung mit elektronischen Landkarten, Nahbereichsradar, Geschwindigkeitssensor, Beschleunigungssensoren, usw. analysiert. In Abhängigkeit vom Ergebnis der Analyse, also von der ermittelten Verkehrssituation, wirkt die Verkehrssituationsanalyseeinrichtung auf die Innenraumkameraanordnung und/ oder Außenraumkameraanordnung und/ oder Darstellungseinrichtung steuerungstechnisch ein, derart, dass die Innenraumdarstellung und/ oder die Außenraumdarstellung verkehrssituationsabhängig erfolgt. So ist es beispielsweise sinnvoll, bei einem Reisebus, der auf der Autobahn fährt, auf eine detaillierte Innenraumdarstellung zu verzichten und nur den umgebenden Verkehr abzubilden. Gleichfalls ist es denkbar, bei dem in Fig. 6a dargestellten LKW 25 die Innenraumkamera 28 nur zuzuschalten, wenn die Hebebühne 30 nach unten oder oben fährt oder sich in der abgesenkten Stellung befindet, also wenn eine Be- oder Entladesituation vorliegt. Anordnungen zur Analyse der Verkehrssituation sind in der Regel so aufgebaut, dass aktuell vorliegende Sensorwertekombinationen mit gespeicherten Sensorwertekombinationen verglichen werden und bei hinreichender Übereinstimmung auf eine bestimmte (Verkehrs-) Situation geschlossen wird. In der einschlägigen Literatur sind derartige Systeme bereits ausführlich beschrieben, so dass sich eine weitergehende Darstellung erübrigt.

### Bezugszeichenliste

- 1: Stadtbus
- 2: vordere Tür
- 3: hintere Tür
- 4: zusteigewillige Person
- 5: aussteigewillige Person
- 6: aussteigende Person
- 7: eingestiegene Person
- 8: sitzende Person
- 9: Fahrer/ Fahrzeugführer
- 10: leere Sitzplätze
- 11: vordere Außenraumkamera
- 12: hintere Außenraumkamera
- 13: vordere Innenraumkamera
- 14: hintere Innenraumkamera
- 15: Heckkamera
- 16: Frontkamera
- 17: weitere Seitenkamera
- 18, 18', 31: Bildschirm
- 19: Darstellungseinrichtung
- 20: Entzerrungseinheit
- 21: Überlagerungseinheit
- 22: Speicher
- 23: Fahrzeugkontur
- 24: Bildstromanalyseeinheit
- 25: LKW
- 26: Packstück
- 27: Personen
- 28: Innenraumkamera
- 29: Außenraumkamera
- 30, 30': Hebebühne
- 31: Bildschirm
- 32: Arbeitsbereichsgrenze
- 33: Arbeitsbereich
- 34: Fahrerhaus
- 35: hintere Laderaumkante
- 36: Gefahrenbereich

## Patentansprüche

1. Verfahren, bei einem Fahrzeug mit Innenraumkameraanordnung und Außenraumkameraanordnung, wobei zur Darstellung des Fahrzeuginnenraums und des Fahrzeugaußenraums wenigstens eine Innenraumkamera (13, 14, 28) und wenigstens eine Außenraumkamera (11, 12, 15, 16, 17, 29) zur Aufnahme jeweils eines Bildstroms vorgesehen sind, wobei die Innenraumkamera (13, 14, 28) zumindest einen Teil des Fahrzeuginnenraums erfasst und die Außenraumkamera (11, 12, 15, 16, 17, 29) zumindest einen Teil des Fahrzeugaußenraums erfasst, wobei die Innenraumkamera (13, 14, 28) und die Außenraumkamera (11, 12, 15, 16, 17, 29) wenigstens Teilbereiche des Fahrzeuginnenraums und des Fahrzeugaußenraums erfassen und diese an eine Darstellungseinrichtung (19) übergeben, wobei die Teilbereiche zumindest in Teilen aneinandergrenzen, wobei ein von der Darstellungseinrichtung (19) darzustellender Bildstrom mittels einer Bildstromanalyseeinheit (24) einer Objektanalyse unterzogen wird, derart, dass diese sich relativ zum Fahrzeug bewegende Objekte, im Fahrzeuginnenraum und im Fahrzeugaußenraum, ermittelt und auf die Darstellungseinrichtung (19) so einwirkt, dass die sich bewegenden Objekte in der Darstellung auf dem Bildschirm (18, 18', 31) kenntlich gemacht sind, dass die Bildstromanalyseeinheit (24) für die sich bewegenden Objekte jeweils einen Bewegungsvektor ermittelt und auf die Darstellungseinrichtung (19) so einwirkt, dass diese die Bewegungsrichtung in Verbindung mit dem jeweiligen Objekt auf dem Bildschirm (18, 18', 31) darstellt, dass sowohl für die Darstellung des Fahrzeuginnenraums, als auch für die Darstellung des Fahrzeugaußenraums Teilbereiche auswählbar und jeweils aus einer gemeinsamen Perspektive auf einem gemeinsamen Bildschirm (18) darstellbar sind, und dass eine Verkehrssituationsanalyseeinrichtung vorgesehen ist, die die Verkehrssituation analysiert und in Abhängigkeit von der ermittelten Verkehrssituation auf die Innenraumkameraanordnung oder Außenraumkameraanordnung oder Darstellungseinrichtung (19) steuerungstechnisch einwirkt, derart, dass die Innenraumdarstellung und die Außenraumdarstellung verkehrssituationsabhängig erfolgt.

2. Verfahren nach Anspruch 1, **dadurch gekennzeichnet, dass** die Darstellung mittels der Darstellungseinrichtung (19) auf wenigstens einem Bildschirm (18, 18', 31) maßstäblich und perspektivisch so erfolgt, dass Darstellungsbereiche des Fahrzeuginnenraums und des Fahrzeugaußenraums zumindest an den aneinandergrenzenden Teilen ohne erkennbare Änderung von Maßstab und Perspektive dargestellt sind.

3. Verfahren nach Anspruch 1 oder 2, **dadurch gekennzeichnet, dass** die Darstellung des Fahrzeuginnenraums und des Fahrzeugaußenraums auf je einem Bildschirm (18, 18', 31) erfolgt, die zueinander so angeordnet sind, dass die aneinandergrenzenden Teilbereiche einander benachbart dargestellt sind oder dass die Darstellung des Fahrzeuginnenraums und des Fahrzeugaußenraums auf einem gemeinsamen Bildschirm (18, 31) erfolgt und dass die aneinandergrenzenden Teilbereiche einander benachbart dargestellt sind.

4. Verfahren nach Anspruch 3, **dadurch gekennzeichnet, dass** die Darstellung des Fahrzeuginnenraums und des Fahrzeugaußenraums auf dem einen gemeinsamen Bildschirm (18, 31) unmittelbar ineinander übergehen.

5. Verfahren nach Anspruch 3 oder 4, **dadurch gekennzeichnet, dass** auf dem Bildschirm (18, 18', 31), zumindest an den aneinandergrenzenden Teilbereichen, eine in einem Speicher hinterlegte Fahrzeugkontur (23) einblendbar ist.

6. Verfahren nach einem der vorhergehenden Ansprüche, **dadurch gekennzeichnet, dass** die Darstellung des Fahrzeugaußenraums auf dem Bildschirm (18, 31) eine wenigstens einen Teil des Fahrzeugaußenraums umfassende Ansicht aus der Vogelperspektive ist und dass die Darstellung des Fahrzeuginnenraums (18, 18', 1) eine wenigstens einen Teil des Fahrzeuginnenraums umfassende Ansicht aus der Vogelperspektive ist.

7. Verfahren nach einem der vorhergehenden Ansprüche, **dadurch gekennzeichnet, dass** wenigstens eine Außenraumkamera (11, 12, 15, 16, 17) und/ oder wenigstens eine Innenraumkamera (13, 14, 28) über eine Nachtsichtfunktion verfügt.

8. Verfahren nach einem der vorhergehenden Ansprüche, **dadurch gekennzeichnet, dass** die Innenkameraanordnung und/ oder die Außenkameraanordnung den Fahrzeuginnenraum und/ oder den Fahrzeugaußenraum vollständig und/oder in einem Winkel von 360 Grad parallel zur Bewegungsebene des Fahrzeugs erfassen.

9. Verfahren nach einem der vorhergehenden Ansprüche, **dadurch gekennzeichnet, dass** der gesamte Fahrzeuginnenraum und der das Fahrzeug umgebende gesamte Fahrzeugaußenraum, bis zu einer vorgebbaren Entfernung vom Fahrzeug, jeweils aus einer gemeinsamen Perspektive auf einem gemeinsamen Bildschirm (18) darstellbar sind.

10. Verfahren nach einem der vorhergehenden Ansprüche, **dadurch gekennzeichnet, dass** die gemeinsame Perspektive eine Vogelperspektive ist.

11. Verfahren nach einem der vorhergehenden Ansprüche, **dadurch gekennzeichnet, dass**, zumindest an den in der Darstellung aneinandergrenzenden Bereichen, eine in einem Speicher vorgehaltene Fahrzeugkontur (23) in die Darstellung einblendbar ist.

12. Verfahren nach einem der vorhergehenden Ansprüche, **dadurch gekennzeichnet, dass** das von der Innenraumkameraanordnung und/oder der Außenraumkameraanordnung gelieferte Bild ein Realbild ist, das zumindest teilweise mittels einer Recheneinheit in ein virtuelles Bild umgerechnet wird und/oder zumindest teilweise durch ein aus Sensordaten errechnetes und/oder erhaltenes virtuelles Bild ersetzt wird.

13. Verfahren nach Anspruch 12, **dadurch gekennzeichnet, dass** an Stelle des Realbildes das virtuelle Bild, ggf. dem Realbild überblendet, auf dem Bildschirm (18, 18', 31) darstellbar ist.

14. Verfahren nach Anspruch 12 oder 13, **dadurch gekennzeichnet, dass** die Umrechnung des Realbildes in das virtuelle Bild so erfolgt, dass dieses in der Darstellung in einer vorgebbaren Darstellungsperspektive und/ oder dreidimensional auf der Darstellungseinrichtung erscheint.

15. Fahrzeug, in dem ein Verfahren nach einem der Ansprüche 1 bis 14 zur Anwendung kommt.

## Claims

1. Method in a vehicle with the passenger compartment camera arrangement and exterior camera arrangement, wherein, for displaying the passenger compartment of the vehicle and the exterior of the vehicle, at least one passenger compartment camera (13, 14, 28) and at least one exterior camera (11, 12, 15, 16, 17, 29) are provided for recording in each case one image stream, wherein the passenger compartment camera (13, 14, 28) captures at least part of the passenger compartment of the vehicle and the exterior camera (11, 12, 15, 16, 17, 29) captures at least part of the exterior of the vehicle, wherein the passenger compartment camera (13, 14, 28) and the exterior camera (11, 12, 15, 16, 17, 29) capture at least partial areas of the passenger compartment of the vehicle and of the exterior of the vehicle and transfer them to a display device (19), wherein the partial areas at least partially adjoin one another, wherein an image stream which is to be displayed by the display device (19) is subjected to object analysis by means of an image stream analysis unit (24) in such a way that the latter determines objects moving relative to the vehicle, in the passenger compartment of the vehicle and in the exterior of the vehicle, and acts on the display device (19) in such a way that the moving objects in the display are indicated on the screen (18, 18', 31), that the image stream analysis unit (24) determines a movement vector for each of the moving objects and acts on the display device (19) in such a way that it displays the direction of movement in conjunction with the respective object on the screen (18, 18', 31), that partial areas can be selected both for the display of the passenger compartment of the vehicle and for the display of the exterior of the vehicle and can each be displayed from a common perspective on a common screen (18), and that a traffic situation-analysis device is provided which analyses the traffic situation and acts, in accordance with the determined traffic situation, on the passenger compartment camera arrangement or exterior camera arrangement or display device (19) in terms of control technology in such a way that the display of the passenger compartment and the display of the exterior are effected in accordance with the traffic situation.

2. Method according to Claim 1, **characterized in that** the display is effected, by means of the display device (19) on at least one screen (18, 18', 31), in terms of scale and perspective in such a way that display areas of the passenger compartment of the vehicle and of the exterior of the vehicle are displayed at least at the adjoining parts without a detectable change in scale or perspective.

3. Method according to Claim 1 or 2, **characterized in that** the display of the passenger compartment of the vehicle and of the exterior of the vehicle is effected on one screen (18, 18', 31) in each case, said screens (18, 18', 31) being arranged with respect to one another in such a way that the adjoining partial areas are represented adjacent to one another or that the display of the passenger compartment of the vehicle and of the exterior of the vehicle is effected on a common screen (18, 31) and that the adjoining partial areas are displayed adjacent to one another.

4. Method according to Claim 3, **characterized in that** the displays of the passenger compartment of the vehicle and the exterior of the vehicle merge immediately one in the other on the one common screen (18, 31).

5. Method according to Claim 3 or 4, **characterized in that** a vehicle contour (23) which is stored in a memory can be included on the screen (18, 18', 31), at least at the adjoining partial areas.

6. Method according to one of the preceding claims, **characterized in that** the display of the exterior of the vehicle on the screen (18, 31) is a view from a bird's eye perspective which comprises at least part of the exterior of the vehicle, and **in that** the display of the passenger compartment (18, 18', 1) of the vehicle is a view from a bird's eye perspective which comprises at least part of the passenger compartment of the vehicle.

7. Method according to one of the preceding claims, **characterized in that** at least one exterior camera (11, 12, 15, 16, 17) and/or at least one passenger compartment camera (13, 14, 28) have a night sight function.

8. Method according to one of the preceding claims, **characterized in that** the passenger compartment camera arrangement and/or the exterior camera arrangement capture the passenger compartment of the vehicle and/or the exterior of the vehicle completely and/or at an angle of 360° parallel to the plane of movement of the vehicle.

9. Method according to one of the preceding claims, **characterized in that** the entire passenger compartment of the vehicle and the entire exterior of the vehicle surrounding the vehicle can be displayed up to a predefinable distance from the vehicle, in each case from a common perspective on a common screen (18).

10. Method according to one of the preceding claims, **characterized in that** the common perspective is a bird's eye perspective.

11. Method according to one of the preceding claims, **characterized in that** a vehicle contour (23) which is kept ready in a memory can be included at least at adjoining areas in the display.

12. Method according to one of the preceding claims, **characterized in that** the image which is supplied by the passenger compartment camera arrangement and/or the exterior camera arrangement is a real image which is converted into a virtual image at least partially by means of a computer unit and/or is at least partially replaced by a virtual image which calculated and/or obtained from sensor data.

13. Method according to Claim 12, **characterized in that** the virtual image can be displayed on the screen (18, 18', 31) at the location of the real image, if appropriate superimposed on the real image.

14. Method according to Claim 12 or 13, **characterized in that** the conversion of the real image into the virtual image takes place in such a way that the latter appears in the display from a predefinable display perspective and/or appears three-dimensionally on the display device.

15. Vehicle in which a method according to one of Claims 1 to 14 is applied.

## Revendications

1. Procédé, dans le cas d'un véhicule équipé d'un système de caméra intérieur et d'un système de caméra extérieur, dans lequel il est prévu au moins un système de caméra intérieur (13, 14, 28) et au moins un système de caméra extérieur (11, 12, 15, 16, 17, 29) pour enregistrer un flux d'images afin d'afficher l'intérieur et l'extérieur du véhicule, dans lequel le système de caméra intérieur (13, 14, 28) détecte au moins une partie de l'intérieur du véhicule et le système de caméra extérieur (11, 12, 15, 16, 17, 29) détecte au moins une partie de l'extérieur du véhicule, dans lequel le système de caméra intérieur (13, 14, 28) et le système de caméra extérieur (11, 12, 15, 16, 17, 29) détectent au moins des zones partielles de l'intérieur du véhicule et de l'extérieur du véhicule et les transfèrent à un dispositif d'affichage (19), dans lequel les zones partielles sont contiguës les unes aux autres au moins en partie, dans lequel un flux d'images devant être représenté par le dispositif d'affichage (19) est soumis à une analyse d'objets au moyen d'une unité d'analyse de flux d'images (24) de manière à ce que cette dernière détermine des objets se déplaçant par rapport au véhicule, à l'intérieur du véhicule et à l'extérieur du véhicule, et à ce qu'elle agisse sur le dispositif d'affichage (19) de façon à ce que les objets se déplaçant soient identifiés dans la représentation sur l'écran (18, 18', 31), dans lequel l'unité d'analyse de flux d'images (24) détermine respectivement un vecteur de déplacement pour les objets se déplaçant et agit sur le dispositif d'affichage (19) de manière à ce que ce dernier représente la direction du déplacement en liaison avec l'objet respectif sur l'écran (18, 18', 31), dans lequel des sous-zones peuvent être sélectionnées tant pour la représentation de l'intérieur du véhicule que pour la représentation de l'extérieur du véhicule et peuvent respectivement être représentées selon une perspective commune sur un écran commun (18), et dans lequel il est prévu un dispositif d'analyse de l'état du trafic qui analyse l'état du trafic et agit par une technique de commande sur le système de caméra intérieur ou le système de caméra extérieur ou sur le dispositif d'affichage (19) en fonction de l'état du trafic déterminé de manière à ce que la représentation intérieure et la représentation extérieure soient effectuées en fonction de l'état du trafic.

2. Procédé selon la revendication 1, **caractérisé en ce que** la représentation est effectuée à l'échelle et en perspective au moyen du dispositif d'affichage (19) sur au moins un écran (18, 18', 31) de manière à ce que des zones de représentation de l'intérieur du véhicule et de l'extérieur du véhicule soient représentées au moins sur les parties contigües sans modification identifiable de l'échelle et de la perspective.

3. Procédé selon la revendication 1 ou 2, **caractérisé en ce que** l'intérieur du véhicule et l'extérieur du véhicule sont représentés sur des écrans respectifs (18, 18', 31) qui sont disposés l'un par rapport à l'autre de manière à ce que les zones partielles contigües soient représentées côte à côte ou à ce que les représentations de l'intérieur du véhicule et de l'extérieur du véhicule soient effectuées sur un écran commun (18, 31) et à ce que les zones partielles contigües soient représentées de côte à côte.

4. Procédé selon la revendication 3, **caractérisé en ce que** les représentations de l'intérieur du véhicule et de l'extérieur du véhicule sur un écran commun (18, 31) sont directement fondues l'une dans l'autre.

5. Procédé selon la revendication 3 ou 4, **caractérisé en ce qu'**un contour de véhicule (23) stocké dans une mémoire peut être inséré sur l'écran (18, 18', 31), au moins dans les zones partielles contigües.

6. Procédé selon l'une des revendications précédentes, **caractérisé en ce que** la représentation de l'extérieur du véhicule sur l'écran (18, 31) est une vue aérienne comprenant au moins une partie de l'extérieur du véhicule et **en ce que** la représentation de l'intérieur du véhicule (18, 18', 1) est une vue aérienne comprenant au moins une partie de l'intérieur du véhicule.

7. Procédé selon l'une des revendications précédentes, **caractérisé en ce qu'**au moins un système de caméra extérieur (11, 12, 15, 16, 17) et/ou au moins un système de caméra intérieur (13, 14, 28) possède une fonction de vision de nuit.

8. Procédé selon l'une des revendications précédentes, **caractérisé en ce que** le système de caméra intérieur et/ou le système de caméra extérieur détectent l'intérieur du véhicule et/ou l'extérieur du véhicule dans sa totalité et/ou sous un angle de 360 degrés parallèlement au plan de déplacement du véhicule.

9. Procédé selon l'une des revendications précédentes, **caractérisé en ce que** la totalité de l'intérieur du véhicule et la totalité de l'extérieur du véhicule entourant le véhicule, jusqu'à une distance prédéfinissable du véhicule, peuvent respectivement être représentés selon une perspective commune sur un écran commun (18).

10. Procédé selon l'une des revendications précédentes, **caractérisé en ce que** la perspective commune est une vue aérienne.

11. Procédé selon l'une des revendications précédentes, **caractérisé en ce qu'**un contour de véhicule (23) maintenu dans une mémoire peut être inséré dans la représentation au moins au niveau des zones contigües dans la représentation.

12. Procédé selon l'une des revendications précédentes, **caractérisé en ce que** l'image délivrée par le système de caméra intérieur et/ou le système de caméra extérieur est une image réelle qui est convertie au moins partiellement en une image virtuelle au moyen d'une unité de calcul et/ou est remplacée au moins partiellement par une image virtuelle calculée et/ou obtenue à partir de données de capteurs.

13. Procédé selon la revendication 12, **caractérisé en ce que** l'image virtuelle peut être représentée sur l'écran (18, 18', 31) au lieu de l'image réelle ou éventuellement superposée à l'image réelle.

14. Procédé selon la revendication 12 ou 13, **caractérisé en ce que** la conversion de l'image réelle en l'image virtuelle s'effectue de manière à ce que celle-ci apparaisse sur le dispositif d'affichage dans la représentation selon une perspective de représentation prédéfinissable et/ou en trois dimensions.

15. Véhicule dans lequel est mis en oeuvre un procédé selon l'une des revendications 1 à 14.
